# EUROPÄISCHE PATENTSCHRIFT

(11) **EP 0 375 927 B1**
(45) Veröffentlichungstag und Bekanntmachung des Hinweises auf die Patenterteilung: **02.03.1994**
(21) Anmeldenummer: 89121482.7
(22) Anmeldetag: 21.11.1989
(51) Int. Cl.: F02M 45/06, F02M 41/12, F02M 63/02

(54) **Kraftstoffeinspritzpumpe für Brennkraftmaschinen**
Fuel injection pump for internal-combustion engines
Pompe à injection de combustible pour moteurs à combustion interne

(30) Priorität: 30.12.1988 DE 3844367
(43) Veröffentlichungstag der Anmeldung: 04.07.1990
(73) Patentinhaber: ROBERT BOSCH GMBH, 70442 Stuttgart (DE)
(72) Erfinder: Rembold, Helmut, D-7000 Stuttgart 40 (DE)

(56) Entgegenhaltungen:
- WO-A-81/00884
- DE-A- 3 430 143
- FR-A- 1 461 342
- PATENT ABSTRACTS OF JAPAN vol. 5, no. 43 (M-60)(715) 23 März 1981

## Beschreibung

Die Erfindung bezieht sich auf eine Kraftstoffeinspritzpumpe für Brennkraftmaschinen nach der Gattung des Patentanspruchs 1.

Aus der DE-PS 1 190 731 ist bereits eine nach dem Verteilerprinzip arbeitende Kraftstoffeinspritzpumpe bekanntgeworden, welche unter anderem zur direkten Einspritzung von Kraftstoff in fremdgezündete Brennkraftmaschinen (Otto-Motoren) verwendet werden kann. Der durch einen Arbeitskolben mit Förderdruck bereitgestellte Kraftstoff wird dabei durch eine sich mit halber Kurbelwellendrehzahl drehende Verteilerwelle auf die einzelnen Einspritzventile verteilt. Diese bekannte Pumpe ist so eingerichtet, daß nahezu zeitgleich mit der der Zündung unmittelbar vorangehenden Haupteinspritzung eine Voreinspritzung in den um 360° Kurbelwellenwinkel versetzt arbeitenden Arbeiszylinder vorgenommen wird. Die Menge der Voreinspritzung ist dabei kleiner als jene der Haupteinspritzung.

Nachteilig bei der bekannten Kraftstoffeinspritzpumpe ist, daß sowohl die insgesamt abgespritzte Kraftstoffmenge als auch das Mengenverhältnis zwischen Vor- und Haupteinspritzung nicht veränderbar sind. Auch der Förderbeginn und das Förderende der bekannten Einrichtung lassen sich während des Betriebes nicht verändern. Insbesondere als Basis für eine moderne Kraftstoffmengensteuerung ist die bekannte Kraftstoffeinspritzpumpe nicht brauchbar, da sich Vor- und Haupteinspritzung gegenseitig beeinflussen und damit unüberwindliche Probleme bei der Mengenteilung auftreten. Zudem machen hydraulische Druckwellen die Zumessung unwägbar.

Durch die JP-A-56/545 ist eine Kraftstoffeinspritzpumpe gemäß der Gattung des Patentanspruchs 1 bekannt. Die dort offenbarte Verteilerpumpe mit dem zugleich als Verteiler dienenden Pumpenkolben weist im Pumpenkolben zwei zueinander parallele Leitungen auf, von denen die eine ständig mit dem Pumpenarbeitsraum verbunden ist und über eine erste Radialbohrung mit einer ersten Verteileröffnung an der Mantelfläche des Pumpenkolbens verbunden ist, und über eine zweite Querbohrung mit einer Ringnut in der Wand des Pumpenzylinders verbunden ist. Über diese und eine weitere Radialbohrung wird die Verbindung zu dem zweiten Kanal im Pumpenkolben hergestellt, der eine Verbindung zu einer zweiten Verteileröffnung an der Mantelfläche des Pumpenkolbens hat und mit anderen Druckleitungen, die zu Einspritzdüsen führen verbunden wird als die erste Verteileröffnung. Diese zweite Verteileröffnung dient der Voreinspritzung, während die erste Verteileröffnung der Haupteinspritzung dient. Ansonsten wird die Steuerung von Kraftstoffmenge und Einspritzzeitpunkt in der für Verteilereinspritzpumpen üblichen Weise durchgeführt. Dazu weist die Verteilereinspritzpumpe einen auf den Pumpenkolben verschiebbaren Ringschieber innerhalb eines Saugraumes auf, welcher Ringschieber durch einen Einspritzpumpenregler verschoben wird und die Entlastung des Pumpenarbeitsraumes im Laufe des Pumpenkolbenförderhubes steuert. Nachteilig bei dieser bekannten Kraftstoffeinspritzpumpe ist ebenfalls, daß das Mengenverhältnis zwischen Vor- und Haupteinspritzung nicht beliebig veränderbar ist, sondern konstruktiv festgelegt ist. Die einzige Eingriffsmöglichkeit besteht über den genannten Ringschieber, der die Kraftstoffeinspritzmenge grundsätzlich steuert.

Es ist weiterhin durch die DE-A-34 30 143 eine Kraftstoffeinspritzpumpe der Verteilerpumpenbauart bekannt, die ebenfalls einen hin- und hergehend und zugleich rotierenden Pumpenkolben aufweist, auf dem zur Steuerung der Kraftstoffeinspritzmenge ein Ringschieber von einem Einspritzpumpenregler verschiebbar ist, so daß ab einem durch den Schieber vorgegebenen Pumpenkolbenförderhub der Pumpenarbeitsraum der Kraftstoffeinspritzpumpe entlastet, die Hochdruckeinspritzung damit unterbrochen wird und somit die zur Einspritzung gelangende Kraftstoffmenge gesteuert wird. Bei dieser Kraftstoffeinspritzpumpe ist der Pumpenkolben als Stufenkolben ausgebildet, der zwei unterschiedliche Pumpenarbeitsräume begrenzt mit unterschiedlich großen Verdrängungsvolumen. Die Pumpen fördern somit mit unterschiedlicher Förderrate. Durch eine Ventilanordnung wird der Förderanteil der einzelnen Pumpenarbeitsräume gesteuert auf zwei Verteileröffnungen verteilt, die jeweils zu unterschiedlichen Einspritzdüsen fördern. Durch die Ventilanordnung wird dabei ein unterschiedlicher Kraftstoffdurchsatz bei der Einspritzpumpe erzielt, wobei die über die eine Verteileröffnung abgesteuerte Kraftstoffmenge anteilig in dem Maße größer wird, wie die durch die andere Verteileröffnung abgespritzte Kraftstoffmenge und umgekehrt. Dazu bedient sich die bekannte Konstruktion eines elektromagnetisch gesteuerten Dreiwegeventils, über das ein Teil des von dem einen Pumpenkolbenteil geförderten Kraftstoffs in den Pumpenarbeitsraum des anderen Pumpenteils geleitet werden kann und von dort zur entsprechenden Verteileröffnung geführt wird. Versorgt der eine der Pumpenarbeitsräume ausschließlich entsprechend der Stellung des Dreiwegeventils die eine der Verteileröffnungen, so besteht die Möglichkeit mit einem zusätzlichen, auch elektrisch gesteuerten Ventil einen Teil des von dem einen Pumpenarbeitsraum geförderten Kraftstoffs zur Entlastungsseite abzuleiten um somit die Förderrate und damit die Fördermenge zu der einen Verteileröffnung unabhängig von der Förderung aus dem anderen Pumpenarbeitsraum zu steuern. Diese Einspritzpumpe ist sehr aufwendig gebaut schon durch die Verwirklichung eines bei Einspritzpumpen nur sehr schwer zu verwirklichenden Stufenkolbens. Zudem ist ein erheblicher Steuerungsaufwand vorgesehen dadurch, daß drei exakt zu steuernde Steuerglieder vorhanden sind.

Die vorliegende Erfindung zielt nun darauf ab, den konstruktiven Aufwand zu verringern und eine unabhängige Zumessung für Vor- und Haupteinspritzung auch dann zu ermöglichen, wenn der Pumpenkolben nur einen Arbeitsraum aufweist. Zur Lösung dieser Aufgabe wird die Kraftstoffeinspritzpumpe gemäß den Merkmalen des kennzeichnenden Teils des Patentanspruchs weitergebildet. Dadurch, daß an den Arbeitsraum des Pumpenkolbens eine Zweigleitung angeschlossen ist, kann über diese Zweigleitung während des Druckaufbaues im Pumpenkolben bzw. auch noch während des Haupteinspritzvorganges Kraftstoff unter Druck für die gleichzeitig oder zu einem gesonderten Zeitpunkt vorzunehmende Zumessung einer Voreinspritzmenge zu einer anderen Einspritzdüse ermöglicht werden, wobei die gewünschte Verteilung der Kraftstoffmenge, welche voreingespritzt werden soll, durch den Verteilerkolben im oder am Pumpenkolben ermöglicht wird. Der beim Druckhub des Pumpenkolbens zur Verfügung stehende Druck kann hiebei auf unterschiedlichste Weise für die gesondert regelbare Voreinspritzung herangezogen werden.

In besonders einfacher Weise kann unmittelbar eine Teilmenge des mit dem Pumpenkolben komprimierten Kraftstoffes zur Voreinspritzung herangezogen werden. In diesem Fall kann die Ausbildung in einfacher Weise so getroffen sein, daß in die Zweigleitung eine Drossel eingeschaltet ist.

Eine weitergehende Regelbarkeit und eine größere Freiheit in bezug auf die Wahl des Zeitpunktes der Voreinspritzung ergibt sich, wenn, wie es einer bevorzugten Ausbildung entspricht, in die Zweigleitung ein Zwischenspeicher eingeschaltet ist. Der in einem derartigen Zwischenspeicher zwischengespeicherte Kraftstoff kann in der Folge zu einem frei wählbaren Zeitpunkt zur Voreinspritzung herangezogen werden, da der Zwischenspeicher den Druck des Kraftstoffes auch dann aufrechterhalten kann, wenn der Arbeitsraum des Pumpenkolbens beispielsweise durch Absteuerung der Haupteinspritzung bereits drucklos geworden ist. Im Fall eines derartigen Zwischenspeichers wird es in der Regel vorteilhaft sein, die Ausbildung so zu treffen, daß in die Zweigleitung ein zum Arbeitsraum des Pumpenkolbens schließendes Rückschlagventil eingeschaltet ist. Alternativ zu einem derartigen Rückschlagventil kann naturgemäß auch ein Magnetventil an dieser Stelle eingeschaltet sein, wobei die Maßnahme, in die Zweigleitung ein zum Arbeitsraum des Pumpenkolbens schließendes Rückschlagventil einzuschalten, auch bei anderen nachgeschalteten Einrichtungen, wie beispielsweise Servokolben bzw. Zumeßkolben, von Bedeutung sein kann, wie nachfolgend noch kurz erläutert werden wird.

Eine gesonderte Regelbarkeit der Voreinspritzmenge kann in einfacher Weise dadurch erreicht werden, daß an oder in die Zweigleitung wenigstens ein Magnetventil eingeschaltet ist. Ein derartiges Magnetventil kann auf unterschiedlichste Weise eingesetzt werden. Beispielsweise kann ein derartiges Magnetventil als Wegeventil ausgebildet sein, welches den Kraftstoffluß aus dem Arbeitsraum des Pumpenkolbens über die Drossel freigibt oder sperrt. In diesem Fall ist das Magnetventil unmittelbar in die Zweigleitung eingeschaltet. Ein Magnetventil kann aber auch an die Zweigleitung angeschaltet sein, um einen Zwischenspeicher aufzuladen bzw. das in einem Zwischenspeicher gesammelte Volumen durch Freigabe des die Aufladung bewirkenden Raumes und Verbindung dieses Raumes mit einer Rückflußleitung wieder zu entleeren. Bei der Entleerung wird in diesem Falle die Voreinspritzung bewirkt. Umgekehrt kann ein derartiges Magnetventil auch in die den Speicherraum des Druckspeichers mit den Verteileröffnungen verbindende Leitung eingeschaltet werden, wobei der Zwischenspeicher erst dann entleert werden kann, wenn das Magnetventil in eine Stellung verschoben wird, in welcher der Zwischenspeicher mit den entsprechenden Verteileröffnungen des Verteilerkolbens in Verbindung gesetzt wird.

Anstelle der Anordnung eines Zwischenspeichers kann die Ausbildung mit Vorteil auch so getroffen werden, daß an die Zweigleitung ein gegen die Kraft einer Feder verschieblicher Zumeßkolben angeschlossen ist, dessen dem Anschluß an die Zweigleitung gegenüberliegender Arbeitsraum mit den gesonderten Verteileröffnungen verbunden ist. Ein derartiger Zumeßkolben hat hiebei zu allererst den wesentlichen Vorteil, daß die für die Voreinspritzung vorgesehene Kraftstoffmenge nicht aus der Druckleitung für die Haupteinspritzung entnommen werden muß. Der Zumeßkolben kann nämlich bei entsprechender Beaufschlagung selbsttätig aus einem Tank ansaugen und die jeweils angesaugte Menge in der Folge durch Beaufschlagung des Zumeßkolbens mit Druckmittel wieder freigeben.

In besonders einfacher Weise kann bei Verwendung eines Druckspeichers oder eines Zumeßkolbens die Ausbildung so getroffen sein, daß das Magnetventil in einer Stellung den Speicherraum des Druckspeichers oder den Arbeitsraum des Zumeßkolbens mit einer Zuführungsleitung für Kraftstoff verbindet und in einer zweiten Stellung diese Verbindung unterbricht, wodurch mit dem Magnetventil gleichzeitig die Funktion eines Rückschlagventiles erfüllt werden kann. Sowohl der Druckspeicher als auch der Servo- bzw. Zumeßkolben können in einfacher Weise federbeaufschlagt sein, so daß der Arbeitshub zum Ausstoß des zwischengespeicherten Mediums zum Zwecke der Voreinspritzung oder der Ansaughub unter der Wirkung der Federkraft erfolgen kann.

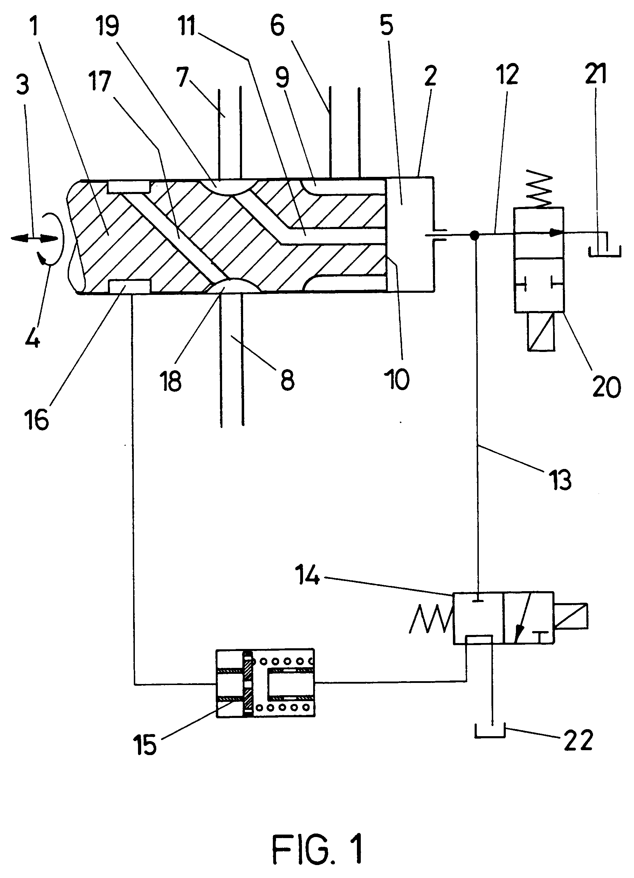

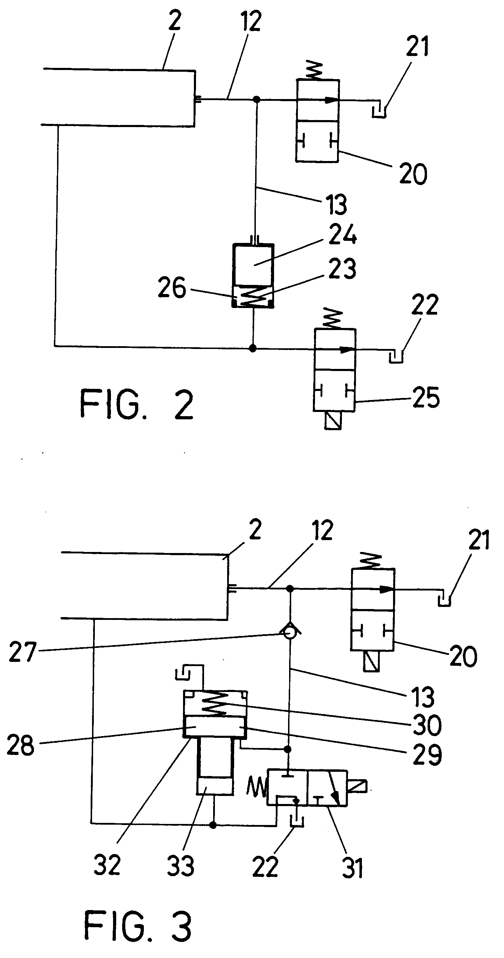

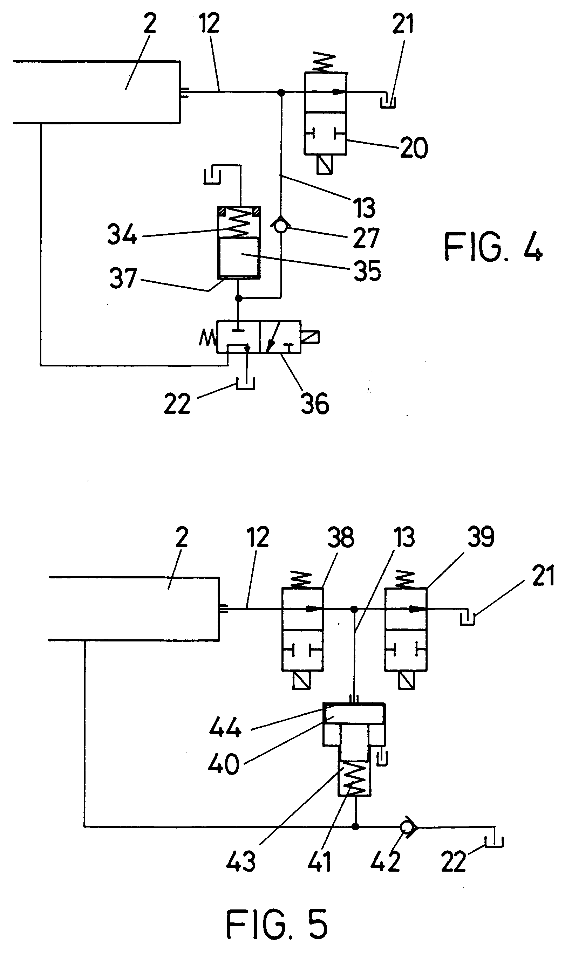

Die Erfindung wird nachfolgend an Hand von in der Zeichnung schematisch dargestellten Ausführungsbeispielen näher erläutert. In dieser zeigen Fig.1 in schematischer Darstellung eine erste Ausführungsform einer erfindungsgemäßen Kraftstoffeinspritzpumpe, wobei in die an den Arbeitsraum des Pumpenkolbens angeschlossene Zweigleitung ein Magnetventil sowie eine Drossel eingeschaltet sind; Fig.2 eine zu Fig.1 abgewandelte Ausführungsform mit einem in die Zweigleitung eingeschalteten Zumeßkolben; Fig.3 eine Ausbildungsform der erfindungsgemäßen Kraftstoffeinspritzpumpe mit einem an die Zweigleitung angeschlossenen Zwischenspeicher in Form eines federbeaufschlagten Stufenkolbens; Fig.4 eine Ausführungsform mit einem an die Zweigleitung eingeschalteten federbeaufschlagten Zwischenspeicher; und Fig.5 eine Ausbildung mit zwei in die Zweigleitung in Serie geschalteten Magnetventilen sowie einem federbeaufschlagten Zumeßkolben.

In Fig.1 ist schematisch ein Kolben 1 dargestellt, welcher in einer in einem nicht näher dargestellten Pumpengehäuse vorgesehenen, zylindrischen Führungsbohrung 2 sowohl zu einer hin- und hergehenden als auch gleichzeitig rotierenden Bewegung angetrieben ist, wie dies durch die Pfeile 3 und 4 angedeutet wird. Der Kolben 1 wird dabei in an sich bekannter Weise durch einen nicht näher dargestellten Nockentrieb über eine Welle angetrieben, welche synchron zu der Drehzahl der von der Einspritzpumpe mit Kraftstoff versorgten Brennkraftmaschine rotiert. Bei Versorgung einer im Viertaktverfahren arbeitenden Brennkraftmaschine dreht sich dabei der Pumpenkolben 1 mit der halben Kurbelwellendrehzahl. Der Pumpenkolben 1 begrenzt einen Arbeitsraum 5, in welchen über eine Zulaufleitung 6 Kraftstoff unter Vorpumpendruck zugeführt wird. Im Pumpengehäuse sind weiters Druckleitungen 7 und 8 zu nicht näher dargestellten Einspritzdüsen bzw. Einspritzventilen vorgesehen.

Nach Zuführung von Kraftstoff aus einer nicht näher dargestellten Kraftstoffversorgungsquelle über die Leitung 6 über Füllnuten 9 im Bereich der Stirnfläche 10 des Kolbens erfolgt durch eine translatorische Bewegung nach einem Abschluß der Zutrittsleitung 6 durch ein Verdrehen des Kolbens 1 ein Druckaufbau im Arbeitsraum 5, welcher über einen an der Stirnfläche 10 mündenden Kanal 11 in geeigneter Drehstellung mit der Zuführungsleitung 7 zu einem Einspritzventil in Verbindung steht. An den Arbeitsraum 5 ist weiters eine Zweigleitung 12 angeschlossen, welche über ein in einer daran anschließenden Zweigleitung 13 vorgesehenes Magnetventil 14 sowie eine Drossel 15 mit einer am Umfang des Pumpenkolbens und Verteilerkolbens 1 vorgesehenen Steuernut 16 in Verbindung steht. Über einen mit der Steuer- bzw. Ringnut 16 in Verbindung stehenden Kanal 17 ist auch die zweite in Fig.1 dargestellte Zuleitung 8 zu einem Einspritzventil über die Verteileröffnung 18 mit Kraftstoff beaufschlagbar. Es ist somit möglich, bei Verwendung nur eines einzigen Arbeitsraumes 5 des Pumpenkolbens 1 gesonderte Verteileröffnungen 18 bzw. 19, welche mit Zuleitungen 7 und 8 zu getrennten Einspritzventilen je nach Drehstellung des Verteilerkolbens 1 in Verbindung stehen, mit Kraftstoff zu beaufschlagen.

Die Steuerung der Haupteinspritzung in die unmittelbar mit dem Arbeitsraum 5 in Verbindung stehende Druckleitung 7 zu einem ersten Einspritzventil erfolgt dabei in bekannter Weise über ein in der Zweigleitung 12 eingeschaltetes Magnetventil 20, welches in der in Fig.1 dargestellten Stellung eine Verbindung des Arbeitsraumes 5 mit einem Rücklauf bzw. Tank 21 öffnet, so daß eine Haupteinspritzung unterbrochen ist. Bei geschlossenem Magnetventil 20 kann durch Schaltung des in der Leitung 13 vorgesehenen Magnetventils 14 über die Drossel 15 eine Voreinspritzung in die gesonderte Leitung 8 erfolgen. Durch die Zwischenschaltung der Drossel 15 wird dabei die Rückwirkung auf die gleichzeitig stattfindende Haupteinspritzung gering gehalten. Ein langsamerer Druckaufbau in der für die Voreinspritzung herangezogenen Leitungsverbindung kann dabei ohne weiteres in Kauf genommen werden, da die zugehörige Einspritzmenge bei der Voreinspritzung nur etwa 10 % der Haupteinspritzmenge betragen soll. Allerdings muß bei der in Fig.1 dargestellten Ausführungsform die Voreinspritzung spätestens mit der Haupteinspritzung beendet sein, wobei dies in jedem Falle durch Betätigung des Magnetventiles 20 erfolgt. In diesem Fall wird die Wirkung des federbelasteten Drosselorgans aufgehoben, um ein schnelles Nadelschließen zu erreichen. Der mit der Drosselbohrung versehene Teller wechselt dabei aufgrund der Druckdifferenzumkehr seine Anlage vom vorderen zum hinteren Anschlag. Über nicht näher bezeichnete Ausnehmungen am Teller und Anschlag kann jetzt der Kraftstoff rasch abströmen. In der in Fig.1 dargestellten Stellung des Magnetventiles 14, welches in einfacher Weise als 3/2-Wegeventil ausgebildet ist, erfolgt eine Verbindung der die Drossel 15 enthaltenden Leitung mit einem Rücklauf bzw. einen auf Niederdruck gehaltenen Pumpensaugraum 22.

Bei der Darstellung gemäß Fig.2 ist der Einfachheit halber lediglich die Führungsbohrung 2 des als Pumpenkolben und Verteilerkolben wirkenden Kolbens 1 dargestellt, welcher vollkommen analog zu der Ausbildung gemäß der Fig.1 ausgebildet ist. An den Arbeitsraum 5 des Pumpenkolbens 1 schließt wiederum eine Zweigleitung 12 an, in welcher für die Steuerung der Haupteinspritzung wiederum ein Magnetventil 20 angeordnet ist. In der an die Zweigleitung 12 anschließenden Zweigleitung 13 ist ein von einer Feder 23 belasteter Zumeßkolben 24 eingeschaltet. Auch bei der in Fig.2 dargestellten Ausführung ist eine Voreinspritzung nur zu einem Zeitpunkt einer Haupteinspritzung möglich, falls das an die Leitung 13 angeschlossene 2/2-Wege-Magnetventil 25 geschlossen wird. Dabei erfolgt durch eine Beaufschlagung des Zumeßkolbens 24 über die Leitungen 12, 13 mit Kraftstoff unter hohem Druck aus dem Arbeitsraum des Pumpenkolbens eine Voreinspritzung des im Arbeitsraum 26 des Zumeßkolbens 24 über das Magnetventil 25 aus dem Saugraum 22 angesaugten Kraftstoffes über gesonderte Verteileröffnungen des Verteilerkolbens. Die Voreinspritzung kann dabei wiederum durch entsprechende Schaltung des Magnetventiles 25 beendet werden, wobei bei Beendigung der Haupteinspritzung über Betätigung des Magnetventiles 20 in jedem Fall auch die Voreinspritzung beendet wird.

Mit der in Fig.3 dargestellten Ausführungsform ist eine Durchführung einer Voreinspritzung auch zu Zeitpunkten möglich, in welchen eine Haupteinspritzung in ein gesondertes Einspritzventil nicht stattfindet. Zu diesem Zweck ist in die Zweigleitung 13 ein zum Arbeitsraum 5 des wiederum nicht näher dargestellten Pumpenkolbens schließendes Rückschlagventil 27 eingeschaltet. Weiters ist an die Zweigleitung 13 ein als Stufenkolben 28 ausgebildeter Zwischenspeicher 29 eingeschaltet, welcher von einer Feder 30 belastet wird. Zur Steuerung der Voreinspritzung findet wiederum ein Magnetventil 31 Verwendung. Während einer Haupteinspritzung, d.h. bei einem Schließen des Magnetventiles 20 kann über die Leitungen 12, 13 ein auf großem Durchmesser des Stufenkolbens 28 liegender Arbeitsraum 32 beaufschlagt werden, wodurch eine Ansaugung von Kraftstoff aus dem Tank 22 in einen gesonderten weiteren Arbeitsraum 33 des Stufenkolbens 28 erfolgt. Bei einem Öffnen des Magnetventiles 20 in die in Fig.3 dargestellten Stellung verhindert dabei das Rückschlagventil 27 einen Druckabfall im Arbeitsraum 32 des Stufenkolbens, so daß eine Voreinspritzung des im Arbeitsraum 33 des Stufenkolbens gespeicherten, angesaugten Kraftstoffes nach Umschaltung des Magnetventils 31 aus der in Fig.3 dargestellten Stellung unabhängig vom Zeitpunkt einer Haupteinspritzung erfolgen kann. Bei einer Umschaltung des Magnetventils 31 erfolgt eine Entlastung des Arbeitsraumes 32 in den Saugraum 22 bei gleichzeitiger, durch die Feder hervorgerufener Verschiebung des Stufenkolbens 28 und Verdichtung des Kraftstoffes im Raum 33 für eine Voreinspritzung.

In Fig.4 ist eine ähnliche Ausführungsform dargestellt, wobei anstelle des Stufenkolbens 28 ein von einer Feder 34 belasteter Zwischenspeicher 35 Verwendung findet. Während einer Haupteinspritzung kann wiederum über ein Rückschlagventil 27 eine Speicherung von Kraftstoff unter Druck aus dem Pumpenarbeitsraum 5 erfolgen. Die von einer Haupteinspritzung unabhängige Voreinspritzung wird wiederum durch ein Magnetventil 36 ausgelöst, welches bei der in Fig.4 dargestellten Ausbildung eine Verbindung zwischen dem Arbeitsraum 37 des Federspeichers 35 mit der entsprechenden Verteileröffnung für die Voreinspritzung am Verteilerkolben sicherstellt. Um Rückwirkungen weitgehend auszuschalten, kann dabei neben dem Rückschlagventil 27 der Speicher 35 über eine nicht näher dargestellte Drossel aufgeladen werden.

Mit der in Fig.5 dargestellten Ausführungsform läßt sich der Zeitpunkt der Voreinspritzung in einem noch größeren Bereich variieren. Dabei sind in die an den Arbeitsraum des Verteiler- und Pumpenkolbens 5 angeschlossene Zweigleitung 12 zwei Magnetventile 38 und 39 in Serie geschaltet, wobei bei der Offenstellung beider Magnetventile wiederum für eine Beendigung einer Haupt- und Voreinspritzung eine Verbindung des Pumpenarbeitsraumes mit dem Tank bzw. dem Rücklauf 21 hergestellt wird. In die an die Zweigleitung 12 anschließende Zweigleitung 13 ist bei dieser Ausführungsform ein Zumeßkolben 40 eingeschaltet, welcher über eine Feder 41 belastet ist. Bei der in Fig. 5 dargestellten Öffnungsstellung beider Magnetventile erfolgt aus dem Tank 22 über ein Rückschlagventil 42 ein Ansaugen von Kraftstoff in einen Arbeitsraum 43 des Zumeßkolbens 40. Für die dargestellte Ausführungsform ergeben sich nun eine Vielzahl von Schaltungsmöglichkeiten. Für den Fall, daß beide Ventile 38 und 39 geschlossen sind, findet nur eine Haupteinspritzung direkt aus dem Pumpenarbeitsraum 5 in eine entsprechend der Drehstellung des Verteilerkolbens 1 fluchtende Zuleitung zu einer Einspritzdüse statt. Bei geöffnetem Magnetventil 38 und gleichzeitig geschlossenem Magnetventil 39 finden eine Haupteinspritzung und Voreinspritzung gleichzeitig statt. Für die Voreinspritzung gelangt über die Zweigleitungen 12 und 13 Kraftstoff hohen Druckes auf den Stufenkolben bzw. Zumeßkolben 40 in einen Arbeitsraum 44, wodurch der im Arbeitsraum 43 gesammelte Kraftstoff verdichtet und über den Verteilerkolben einer Einspritzdüse zur Voreinspritzung zugeführt wird. Für den Fall, daß zunächst beide Ventile 38 und 39 geschlossen sind, findet bei geschlossenem ersten Magnetventil 38 lediglich eine Haupteinspritzung statt. Nach dem Öffnen des Magnetventils 38 wird die abgesteuerte Kompressionsmenge und die weitere Fördermenge aus dem Pumpenarbeitsraum auf den Zumeßkolben 40 abgegeben, wodurch sich dieser, wie oben erläutert, nach unten bewegt und eine Voreinspritzung auslöst. Die Flächen des Zumeßkolbens an der der Leitung 13 zugewandten Seite sowie an der dem Arbeitsraum 43 zugewandten Seite, müssen dabei so bemessen sein, daß der nach dem Öffnen des Magnetventils 38 entstehende Rücklaufdruck deutlich unter dem Düsenschließdruck jener Einspritzdüse liegt, in welcher bis zum Öffnen des Magnetventils 38 eine Haupteinspritzung vorgenommen wurde. Die unabhängig davon nunmehr erfolgende Voreinspritzung wird wiederum durch Betätigung des Magnetventils 39 beendet.

Weiters ist eine Kombination der in Serie geschalteten Magnetventile mit einer Ausführungsform gemäß der Fig.3 mit einer Zwischenspeicherung der Voreinspritzmenge denkbar, wodurch noch größere Freiheiten in bezug auf die Wahl der Einspritzvorgänge bei der Haupteinspritzung und der Voreinspritzung möglich werden.

Mit sämtlichen der oben beschriebenen Ausführungsformen ist es dabei möglich, im Ladungswechsel-OT des Motors über eine Einspritzdüse eine Voreinspritzmenge und im Zünd-OT über eine gesonderte Einspritzdüse eine Haupteinspritzmenge einzuspritzen.

## Patentansprüche

1. Kraftstoffeinspritzpumpe für Brennkraftmaschinen mit einem in einer Führungsbohrung (2) hin- und hergehend angetriebenen Pumpenkolben (1), der zugleich rotierend und dabei als Verteiler dienend angetrieben wird und in der Führungsbohrung einen Arbeitsraum (5) einschließt, der über einen im Pumpenkolben verlaufenden Kanal (11) mit einer ersten Verteileröffnung (19) verbunden ist, die an der Mantelfläche des Pumpenkolbens mündet und bei den einzelnen Förderhüben des Pumpenkolbens in Abhängigkeit von dessen Drehstellung jeweils mit einer von mehreren vom Umfang der Führungsbohrung (2) verteilt angeordneten, zu verschiedenen Einspritzdüsen abführenden Druckleitungen (7, 8) verbunden ist und mit einer zweiten an der Mantelfläche des Pumpenkolbens mündenden und je nach Drehstellung des Pumpenkolbens während des Förderhubs des Pumpenkolbens mit verschiedenen Einspritzventilen in Verbindung stehenden Verteileröffnung (18), die mit einer vom Pumpenarbeitsraum abzweigenden Zweigleitung (13) wenigstens mittelbar mit dem Pumpenarbeitsraum verbindbar ist, wobei die zweite Verteileröffnung (18) über einen Kanal (17) im Pumpenkolben mit einer Ringnut (16) zwischen Pumpenkolbenumfang und Führungsbohrung verbunden ist, in die die Zweigleitung (13) mündet und mit einer mit dem Pumpenarbeitsraum (5) verbundenen Entlastungsleitung (12), in der ein den Durchtritt der Entlastungsleitung steuerndes Ventil angeordnet ist, dadurch gekennzeichnet, daß die Entlastungsleitung (12) außerhalb des Pumpenkolbens verläuft und daß das den Durchtritt der Entlastungsleitung (12) steuernde Ventil ein erstes elektrisch gesteuertes Ventil (20) ist und daß die Zweigleitung (13) durch ein zweites elektrisch gesteuertes Ventil (14, 25, 31, 36, 38) steuerbar ist, wobei die Zweigleitung außerhalb des Pumpenkolbens verläuft.

2. Kraftstoffeinspritzpumpe nach Anspruch 1, dadurch gekennzeichnet, daß das zweite elektrisch gesteuerte Ventil (14) ein 2/3-Ventil ist, das in den Zweigleitungsteil (13) eingesetzt ist und der stromabwärts des zweiten elektrisch gesteuerten Ventils (14) liegende Teil der Zweigleitung (13) durch das zweite elektrisch gesteuerte Ventil (14) in seiner einen Schaltstellung entlastbar und in seiner anderen Schaltstellung mit dem Pumpenarbeitsraum verbindbar ist.

3. Kraftstoffeinspritzpumpe nach Anspruch 2, dadurch gekennzeichnet, daß zwischen dem zweiten elektrisch gesteuerten Ventil (14) und der Ringnut (16) in der Zweigleitung eine Drossel (15) eingesetzt ist, die in Entlastungsrichtung in Richtung zweiten elektrisch gesteuerten Ventil (14) umgehbar ist.

4. Kraftstoffeinspritzpumpe nach Anspruch 1, dadurch gekennzeichnet, daß in den Zweigleitungsteil (13) zwischen Pumpenarbeitsraum (5) und Ringnut (16) ein Zwischenspeicher (24, 26; 28, 33; 40, 43) eingesetzt ist, dessen bewegliche Wand (24, 28, 40) durch den Druck im Pumpenarbeitsraum bis zu einem festen Anschlag gegen die Kraft einer Rückstellfeder (23, 30, 41) verstellbar ist und zwischen Zwischenspeicher und Ringnut (16) eine zu einem Kraftstoffvorrat (22) führende Leitung abzweigt, in der ein Ventil (25, 31, 42) angeordnet ist.

5. Kraftstoffeinspritzpumpe nach Anspruch 4, dadurch gekennzeichnet, daß das Ventil das zweite elektrisch gesteuerte Ventil (25, 31) ist.

6. Kraftstoffeinspritzpumpe nach Anspruch 4, dadurch gekennzeichnet, daß das Ventil ein in Richtung Kraftstoffvorrat schließendes Rückschlagventil (42) ist.

7. Kraftstoffeinspritzpumpe nach Anspruch 5, dadurch gekennzeichnet, daß das elektrisch gesteuerte Ventil ein 2/2-Ventil ist.

8. Kraftstoffeinspritzpumpe nach Anspruch 4, dadurch gekennzeichnet, daß die bewegliche Wand (28, 40) mit einer zweiten beweglichen Wand fest verbunden ist, die einen Arbeitsraum (33, 43) begrenzt, der über das Ventil mit dem Kraftstoffvorrat verbunden oder von diesem trennbar ist.

9. Kraftstoffeinspritzpumpe nach Anspruch 8, dadurch gekennzeichnet, daß das Ventil das zweite elektrisch gesteuerten Ventil (31) ist und als 3/2-Ventil ausgestaltet ist.

10. Kraftstoffeinspritzpumpe nach Anspruch 9, dadurch gekennzeichnet, daß die bewegliche Wand (28) über ein in Richtung Pumpenarbeitsraum schließendes Rückschlagventil (27) mit dem Pumpenarbeitsraum (5) verbindbar ist und über das elektrisch gesteuerte 3/2-Ventil mit dem Kraftstoffvorrat (21) verbindbar ist.

11. Kraftstoffeinspritzpumpe nach Anspruch 1, dadurch gekennzeichnet, daß mit der Zweigleitung ein Zwischenspeicher (35, 37) verbunden ist, der über ein zum Pumpenarbeitsraum (5) schließendes Rückschlagventil (27) mit dem Pumpenarbeitsraum verbunden ist und dessen bewegliche Wand (35) gegen eine Rückstellfeder (34) bis zu einem festen Anschlag verstellbar ist und über das zweite elektrisch gesteuerte Ventil (36), das als ein 3/2-Ventil ausgestaltet ist in dessen einer Stellung von der weiter zur Ringnut (16) führenden Zweigleitung (13) getrennt ist, wobei das 3/2-Ventil zugleich die weiterführende Zweigleitung mit einem Kraftstoffvorrat (22) verbindet und in dessen anderer Stellung die bewegliche Wand mit der weiterführenden Zweigleitung (13) verbunden ist.

12. Kraftstoffeinspritzpumpe nach Anspruch 1, dadurch gekennzeichnet, daß in der Zweigleitung (13) zwischen Pumpenarbeitsraum (5) und Ringnut (16) ein Zwischenspeicher (40, 43) angeordnet ist, dessen bewegliche Wand (40) durch den Druck im Pumpenarbeitsraum bis zu einem festen Anschlag gegen die Kraft einer Feder (41) verstellbar ist und zwischen der beweglichen Wand des Zwischenspeichers und Ringnut (16) in der Zweigleitung ein in Richtung zu einem Kraftstoffvorrat (22) schließendes Rückschlagventil (42) vorgesehen ist und zwischen dem Zwischenspeicher (40, 43) und dem Pumpenarbeitsraum (5) in der Zweigleitung (13) das als 2/2-Ventil ausgebildete zweite elektrisch gesteuerte Ventil (38) eingesetzt ist.

## Claims

1. Fuel injection pump for internal combustion engines, having a pump piston (1) driven in a reciprocating manner in a guide hole (2), which pump piston is driven so that it rotates, simultaneously acting as a distributor, and encloses a working space (5) in the guide hole, which working space (5) is connected via a passage (11), extending in the pump piston, to a first distributor opening (19), which opens at the outer surface of the pump piston and, during each individual delivery stroke of the pump piston, is connected, depending on the rotational position of the latter, to one of a plurality of pressure conduits (7, 8), which are arranged so that they are distributed around the periphery of the guide hole (2) and lead away to different injection nozzles, and a second distributor opening (18), which opens at the outer surface of the pump piston and is in connection with different injection valves during the delivery stroke of the pump piston depending on the rotational position of the latter, which distributor opening (18) can be connected at least indirectly to the pump working space by means of a branch conduit (13) branching off from the pump working space, the second distributor opening (18) being connected to an annular groove (16) between the pump piston periphery and the guide hole by means of a passage (17) in the pump piston, the branch conduit (13) entering into the annular groove (16), and having a relief conduit (12) connected to the pump working space (5), a valve controlling the flow through the relief conduit being arranged in this relief conduit (12), characterised in that the relief conduit (12) extends outside the pump piston and in that the valve controlling the flow through the relief conduit (12) is a first electrically controlled valve (20) and in that the branch conduit (13) can be controlled by a second electrically controlled valve (14, 25, 31, 36, 38), the branch conduit extending outside the pump piston.

2. Fuel injection pump according to Claim 1, characterised in that the second electrically controlled valve (14) is a 2/3-way valve, which is inserted in the branch conduit (13) and the part of the branch conduit (13) located downstream of the second electrically controlled valve (14) can be relieved by the second electrically controlled valve (14) in one of its switching positions and can be connected to the working space in the other switching position of the second electrically controlled valve (14).

3. Fuel injection pump according to Claim 2, characterised in that a throttle (15) is inserted in the branch conduit between the second electrically controlled valve (14) and the annular groove (16), which throttle can be bypassed in the relief direction in the direction of the second electrically controlled valve (14).

4. Fuel injection pump according to Claim 1, characterised in that an intermediate reservoir (24, 26; 28, 33; 40, 43) is inserted in the branch conduit part (13) between the pump working space (5) and the annular groove (16), the movable wall (24, 28, 40) of which intermediate reservoir (24, 26; 28, 33; 40, 43) can be adjusted, by the pressure in the pump working space, as far as a fixed stop against the force of a reset spring (23, 30, 41) and a conduit, in which a valve (25, 31, 42) is arranged and which leads to a fuel storage vessel (22), branches off between the reservoir and the annular groove (16).

5. Fuel injection pump according to Claim 4, characterised in that the valve is the second electrically controlled valve (25, 31).

6. Fuel injection pump according to Claim 4, characterised in that the valve is a non-return valve (42) closing in the direction of the fuel storage vessel.

7. Fuel injection pump according to Claim 5, characterised in that the electrically controlled valve is a 2/2-way valve.

8. Fuel injection pump according to Claim 4, characterised in that the movable wall (28, 40) is securely connected to a second movable wall bounding a working space (33, 43), which is connected to the fuel storage vessel or can be separated from the latter by means of the valve.

9. Fuel injection pump according to Claim 8, characterised in that the valve is the second electrically controlled valve (31) and is embodied as a 3/2-way valve.

10. Fuel injection pump according to Claim 9, characterised in that the movable wall (28) can be connected to the pump working space (5) by means of a non-return valve (27) closing in the direction of the pump working space and can be connected to the fuel storage vessel (21) by means of the electrically controlled 3/2-way valve.

11. Fuel injection pump according to Claim 1, characterised in that an intermediate reservoir (35, 37) is connected to the branch conduit, which intermediate reservoir (35, 37) is connected to the pump working space by means of a non-return valve (27) closing towards the pump working space (5) and whose movable wall (35) can be adjusted as far as a fixed stop against a reset spring (34) and is separated from the branch conduit (13) leading on to the annular groove (16) by means of the second electrically controlled valve (36), which is embodied as a 3/2-way valve, in one of the positions of the latter, the 3/2-way valve simultaneously connecting the further branch conduit to a fuel storage vessel (22) and, in its other position, the moving wall is connected to the continuing branch conduit (13).

12. Fuel injection pump according to Claim 1, characterised in that an intermediate reservoir (40, 43) is arranged in the branch conduit (13) between the pump working space (5) and the annular groove (16), the movable wall (40) of which intermediate reservoir (40, 43) can be adjusted to a fixed stop against the force of a spring (41) by the pressure in the pump working space and a non-return valve (42) closing in the direction towards the fuel storage vessel (22) is provided in the branch conduit between the movable wall of the intermediate reservoir and the annular groove (16) and the second electrically controlled valve (38), configured as a 2/2-way valve, is inserted in the branch conduit (13) between the intermediate reservoir (40, 43) and the pump working space (5).

## Revendications

1. Pompe d'injection de carburant pour des moteurs à combustion interne, comportant un piston de pompe (1) entraîné suivant un mouvement alternatif dans un alésage de guidage (2), ce piston étant en même temps entraîné en rotation et servant de distributeur, et il définit dans l'alésage de guidage, une chambre de travail (5) reliée à un premier orifice de distribution (19) par un canal (11) passant dans le piston de la pompe, cet orifice débouchant à la surface enveloppe du piston de pompe et, pour les différentes courses de refoulement du piston de pompe, en fonction de sa position de rotation, cet orifice est relié à l'une des différentes conduites de pression (7, 8) réparties à la périphérie de l'alésage de guidage (2) et conduisant aux différents injecteurs, et avec un second orifice de distributeur (18) débouchant dans la surface enveloppe du piston de pompe et qui, suivant la position de rotation du piston de pompe pendant sa course de refoulement, communique avec différents injecteurs, ce second orifice de distribution pouvant être relié à une conduite de dérivation (13) dérivent de la chambre de travail de la pompe au moins par une liaison indirecte, le second orifice de distribution (18) étant relié par un canal (17) du piston de pompe à une rainure annulaire (16) entre la périphérie du piston de pompe et l'alésage de guidage, rainure dans laquelle débouche la conduite de dérivation (13) et avec une conduite de décharge (12) reliée à la chambre de travail (5) dans laquelle est prévue une soupape commandant le passage de la conduite de décharge, pompe d'injection de carburant caractérisée en ce que la conduite de décharge (12) passe à l'extérieur du piston de pompe et en ce que la soupape commandant la section de la conduite de décharge (12) est une première soupape (20) électrique et en ce que la conduite de dérivation (13) peut être commandée par une seconde soupape à commande électrique (14, 25, 31, 36, 38), la conduite de dérivation passant à l'extérieur du piston de pompe.

2. Pompe d'injection de carburant selon la revendication 1, caractérisée en ce que la soupape à commande électrique (14) est une électrovanne à deux/trois voies placée dans la partie (13) de la conduite de dérivation et la partie de cette conduite de dérivation qui se trouve en aval de la seconde soupape à commande électrique (14) peut être déchargée par la seconde soupape à commande électrique (14) lorsque celle-ci est dans une position de commutation alors qu'elle est reliée à la chambre de travail de la pompe lorsque la soupape est dans l'autre position de commutation.

3. Pompe d'injection de carburant selon la revendication 2, caractérisée en ce qu'entre la'seconde soupape à commande électrique (14) et la rainure annulaire (16) la conduite de dérivation comporte un organe d'étranglement (15) qui peut être contourné dans le sens de la décharge en direction de la seconde soupape à commande électrique (14).

4. Pompe d'injection de carburant selon la revendication 1, caractérisée en ce que dans la partie de la conduite de dérivation (13) comprise entre la chambre de travail (5) de la pompe et la rainure annulaire (16) on a un réservoir intermédiaire (24, 26 28, 33 ; 40, 43) dont la paroi mobile (24, 28, 40) peut se déplacer sous l'effet de la pression régnant dans la chambre de travail de la pompe jusqu'à venir contre une butée fixe, contre la force développée par un ressort de rappel (23, 30, 41) et entre le réservoir intermédiaire et la rainure annulaire (16) dérive une conduite allant à une réserve de carburant (22) conduite dans laquelle se trouve une soupape (25, 31, 42).

5. Pompe d'injection de carburant selon la revendication 4, caractérisée en ce que la soupape est la seconde soupape à commande électrique (25, 31).

6. Pompe d'injection de carburant selon la revendication 4, caractérisée en ce que la soupape est un clapet d'arrêt (42) se fermant en direction de la réserve de carburant.

7. Pompe d'injection de carburant selon la revendication 4, caractérisée en ce que la soupape à commande électrique est une soupape à deux/deux voies.

8. Pompe d'injection de carburant selon la revendication 4, caractérisée en ce que la cloison mobile (28, 40) est solidaire d'une seconde cloison mobile qui délimite une chambre de travail (33, 43) susceptible d'être reliée ou coupée de la réserve de carburant par la soupape.

9. Pompe d'injection de carburant selon la revendication 8, caractérisée en ce que la soupape et la seconde soupape à commande électrique (31) est réalisée sous la forme d'une soupape à trois/deux voies.

10. Pompe d'injection de carburant selon la revendication 9, caractérisée en ce que la cloison mobile (28) peut être reliée à la chambre de travail (5) de la pompe par un clapet antiretour (27) se fermant en direction de la chambre de travail de la pompe, et peut aussi être reliée à l'alimentation en carburant (21) par l'intermédiaire de la soupape à trois/deux voies à commande électrique.

11. Pompe d'injection de carburant selon la revendication 1, caractérisée en ce qu'un réservoir intermédiaire (35, 37) est relié à la conduite de dérivation, ce réservoir étant relié à la chambre de travail de la pompe par un clapet antiretour (27) se fermant vers la chambre de travail (5) de la pompe et la cloison mobile (35) de ce réservoir est mobile contre l'action d'un ressort de rappel (34) jusque contre une butée fixe et est séparée par la seconde soupape à commande électrique (36) en forme de soupape à trois/deux voies dans l'une de ses positions de la conduite de dérivation (13) conduisant à la rainure annulaire (16), la soupape à trois/deux voies reliant en même temps la conduite de dérivation conduisant à une réserve de carburant (22) et dans son autre position, la cloison mobile est reliée à la conduite de dérivation (16) continuant.

12. Pompe d'injection de carburant selon la revendication 1, caractérisée par un réservoir intermédiaire (40, 43) dans la conduite de dérivation (13) entre la chambre de travail (5) de la pompe et la rainure annulaire (16), la cloison mobile (40) de ce réservoir intermédiaire étant déplaçable par la pression régnant dans la chambre de travail de la pompe jusqu'à une butée fixe contre l'action d'un ressort (41) et entre la paroi mobile du réservoir intermédiaire et la rainure annulaire (16), il est prévu un clapet antiretour (42) qui se ferme en direction de l'alimentation en carburant (22) et entre le réservoir intermédiaire (40, 43) et la chambre de travail (5) de la pompe, la conduite de dérivation (13) comporte la seconde soupape à commande électrique (33) réalisée sous la forme d'une soupape à deux/deux voies.
